# EUROPEAN PATENT APPLICATION

(11) **EP 4 518 514 A1**
(43) Date of publication of application: **05.03.2025**
(21) Application number: 22940046.0
(22) Date of filing: 25.04.2022
(51) Int. Cl.: H04W 72/20

(54) **TERMINAL AND BASE STATION**

(71) Applicant: NTT DOCOMO, INC., Tokyo 100-6150 (JP)
(72) Inventor: SHIBAIKE, Naoya, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2022/018708
(87) International publication number: WO 2023/209765

(57) **Abstract**

A terminal includes: a reception unit configured to receive, from a base station, configuration information of SRS resource sets the number of which is greater than a specific value at most as resource configuration information of an SRS (sounding reference signal) for antenna switching; and a transmission unit configured to transmit the SRS based on the resource configuration information.

## Description

### Technical Field

The present invention relates to a terminal and a base station in a radio communication system.

### Background Art

In New Radio (NR) (also referred to as "5G") which is a successor system of long term evolution (LTE), techniques for satisfying requirements such as a large-capacity system, a high-speed data transmission rate, low delay, simultaneous connection of a large number of terminals, low cost, and power saving have been studied. In addition, in NR, the use of a highfrequency band such as 52.6 GHz to 114.25 GHz is being studied.

In NR, an SRS (Sounding Reference Signal) utilization method is defined in which a base station acquires downlink CSI (Channel State Information) by utilizing channel symmetry by an SRS transmitted from a terminal (Non-Patent Document 1). The usage of the SRS is referred to as antenna switching.

### Prior Art Document

### Non-Patent Document

Non-Patent Document 1: 3GPP TS 38.214 V16.3.0 (2020-09)
Non-Patent Document 2: 3GPP TS 38.331 V16.2.0 (2020-09)

### SUMMARY OF THE INVENTION

### Problems to be Solved by the Invention

However, a terminal conforming to the existing NR standard that assumes a frequency band up to 52.6 GHz may not be able to appropriately perform the operation of antenna switching in a high frequency band such as 52.6 GHz to 114.25 GHz.

The present invention has been made in view of the above, and an object of the present invention is to provide a technique that enables a terminal to appropriately perform SRS transmission for acquiring downlink channel state information.

### Means for Solving the Problems

According to the disclosed technique, there is provided a terminal including:
a reception unit configured to receive, from a base station, configuration information of SRS resource sets the number of which is greater than a specific value at most as resource configuration information of an SRS (sounding reference signal) for antenna switching; and
a transmission unit configured to transmit the SRS based on the resource configuration information.

### Effects of the Invention

According to the disclosed technique, a technique that enables a terminal to appropriately perform SRS transmission for acquiring downlink channel state information is provided.

### Brief Description of the Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram showing an example of a band;
[Fig. 4] FIG. 4 is a diagram showing a relationship between SCS and a symbol length;
[Fig. 5] FIG. 5 is a diagram for explaining an example of SRS assisted DL CSI acquisition;
[Fig. 6] FIG. 6 is a diagram for explaining an example of SRS assisted DL CSI acquisition;
[Fig. 7] FIG. 7 is a diagram showing a minimum guard period between SRS resources;
[Fig. 8] FIG. 8 is a diagram showing an example of a value of Y;
[Fig. 9] FIG. 9 is a diagram showing an example of a value of Y;
[Fig. 10] FIG. 10 is a diagram for explaining an operation example of a base station 10 and a terminal 20;
[Fig. 11] FIG. 11 is a diagram showing an example of a value of Y;
[Fig. 12] FIG. 12 is a diagram for explaining an operation example of the base station 10 and the terminal 20;
[Fig. 13] FIG. 13 is a diagram showing an example of configuration of SRS resources;
[Fig. 14] FIG. 14 is a diagram showing an example of configuration of SRS resources;
[Fig. 15] FIG. 15 is a diagram showing an example of the number of SRS resources for each SRS resource ID;
[Fig. 16] FIG. 16 is a diagram showing an example of a functional configuration of the base station 10 according to an embodiment of the present invention;
[Fig. 17] FIG. 17 is a diagram showing an example of a functional configuration of the terminal 20 according to an embodiment of the present invention;
[Fig. 18] FIG. 18 is a diagram showing an example of a hardware configuration of the base station 10 or the terminal 20 according to an embodiment of the present invention; and
[Fig. 19] FIG. 19 is a diagram showing a configuration example of a vehicle.

### Detailed Description of the Invention

Hereinafter, embodiments of the present invention will be described with reference to the drawings. The embodiment described below is an example, and the embodiment to which the present invention is applied is not limited to the following embodiment.

In the operation of the radio communication system according to the embodiment of the present invention, existing techniques are used as appropriate. The existing technology is, for example, existing NR. The radio communication system (the base station 10 and the terminal 20) in the present embodiment basically performs an operation according to an existing regulation (for example, Non-Patent Documents 1 and 2 and other technical specifications of R-16). However, in order to solve the problem in the case where the use of the high frequency band is assumed, the base station 10 and the terminal 20 also perform operations that are not included in the existing technical specification. In the description of the embodiments to be described later, operations that are not defined in the existing specifications are mainly described. Note that the numerical values described below are all examples.

In the embodiments of the present invention, the duplex scheme may be a time division duplex (TDD) scheme, a frequency division duplex (FDD) scheme, or another scheme (for example, flexible duplex).

In the embodiments of the present invention, a radio parameter or the like "being configured" may mean that a predetermined value is pre-configured or that a radio parameter notified from the base station 10 or the terminal 20 is configured.

### (System Configuration)

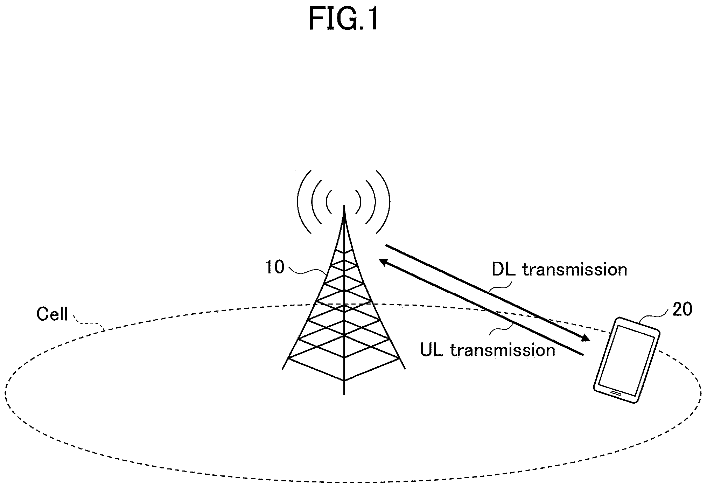

FIG. 1 is a diagram for explaining a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resources of the radio signal are defined in the time domain and the frequency domain.

OFDM is used as a radio access scheme. In the frequency domain, at least 15 kHz, 30 kHz, 120 kHz, and 240 kHz are supported as SubCarrier spacing (SCS). A wider SCS than 240 kHz may be supported. Further, a resource block is formed with a predetermined number (for example, 12) of consecutive subcarriers regardless of SCS.

The terminal 20 detects SSB (SS/PBCH block) when performing initial access, and identifies the SCS in a PDCCH and a PDSCH based on the PBCH included in the SSB.

In the time domain, a slot is formed with a plurality of OFDM symbols (for example, 14 symbols regardless of the subcarrier interval). Hereinafter, the OFDM symbol is referred to as a "symbol". A slot is a scheduling unit. Further, a subframe of a 1 ms section is defined, and a frame including 10 subframes is defined. The number of symbols per slot is not limited to 14.

As illustrated in FIG. 1, the base station 10 transmits control information or data to the terminal 20 in downlink (DL), and receives control information or data from the terminal 20 in uplink (UL). Both the base station 10 and the terminal 20 can transmit and receive signals by performing beamforming. In addition, both the base station 10 and the terminal 20 can apply communication by multiple input multiple output (MIMO) to DL or UL. In addition, both the base station 10 and the terminal 20 may perform communication via a secondary cell (SCell) and a primary cell (PCell) by carrier aggregation (CA).

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives control information or data from the base station 10 in DL and transmits control information or data to the base station 10 in UL, thereby using various communication services provided by the radio communication system.

The terminal 20 can perform carrier aggregation in which a plurality of cells (a plurality of component carriers (CCs)) are aggregated to communicate with the base station 10. In the carrier aggregation, one PCell (primary cell) and one or more SCells (secondary cells) are used. Also, a PUCCH-SCell with a PUCCH may be used.

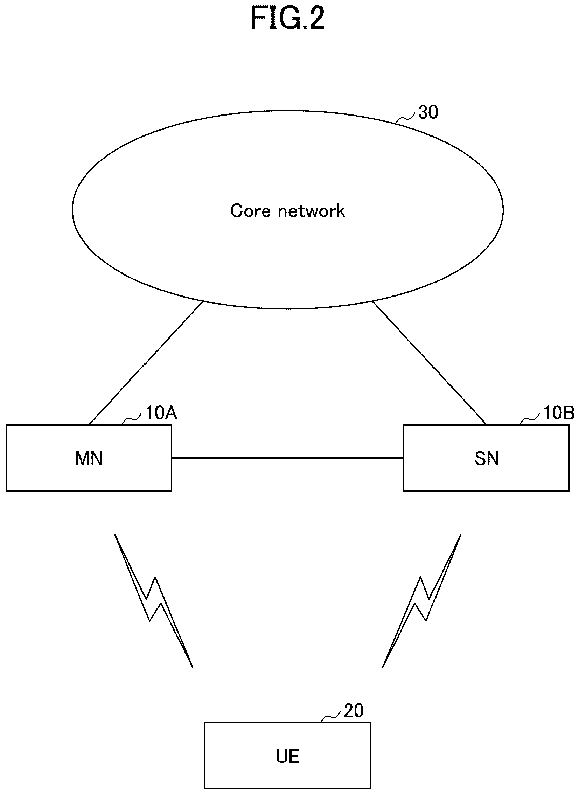

FIG. 2 illustrates a configuration example of a radio communication system in a case where NR-Dual connectivity (NR-DC) is executed. As shown in FIG. 2, the base stations 10A and 10B are provided as a master node (MN) and a secondary node (SN), respectively. The base stations 10A and 10B are connected to a core network. The terminal 20 communicates with both the base stations 10A and 10B.

A cell group provided by the base station 10A serving as the MN is referred to as a master cell group (MCG), and a cell group provided by the base station 10B serving as the SN is referred to as a secondary cell group (SCG). In DC, the MCG is formed with one PCell and one or more SCells, and the SCG is formed with one PSCell (Primary SCell) and one or more SCells. Note that, in the present specification, a CC (component carrier) and a cell may be used synonymously. The PCell and the PSCell may be referred to as an SPCell.

In the radio communication system according to the present embodiment, when an unlicensed band is used, LBT (Listen Before Talk) is executed. The base station 10 or the terminal 20 performs transmission when the LBT result indicates "idle", and does not perform transmission when the LBT result indicates "busy".

### (Frequency Band)

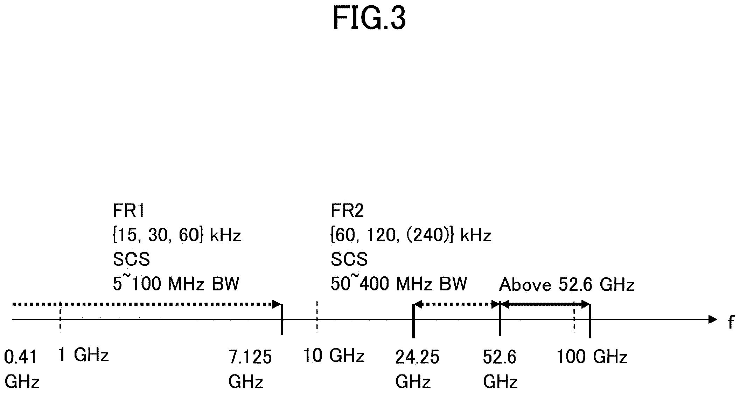

FIG. 3 shows an example of frequency bands used in existing NR and frequency bands used in the radio communication system according to the present embodiment. As frequency bands (may be referred to as frequency ranges) in the existing NR, there are two frequency bands of FR1 (0. 41 GHz to 7.125 GHz) and FR2 (24.25 GHz to 52. 6 GHz). As illustrated in FIG. 3, in FR1, 15 kHz, 30 kHz, and 60 kHz are supported as SCS, and 5 to 100 MHz are supported as bandwidths (BW). In FR2, 60 kHz, 120 kHz, and 240 kHz (only SSB) are supported as SCS, and 50 to 400 MHz are supported as bandwidths (BW).

The radio communication system according to the present embodiment is assumed to use a frequency band (for example, 52.6 GHz to 114.25 GHz) higher than 52.6 GHz which is not used in the existing NR. This band may be referred to as FR4.

Furthermore, in the present embodiment, it is assumed that SCS that is wider than existing SCS is used in association with the expansion of the frequency band as described above. For example, 480 kHz or SCS wider than 480 kHz is used as SCS of SSB and PDCCH/PDSCH.

### (Problem)

In a high frequency band, it is assumed that a large number of narrow beams are used to compensate for a large propagation loss. As SCS, an SCS (for example, 480 kHz or 960 kHz) wider than the existing SCS in FR2 is used.

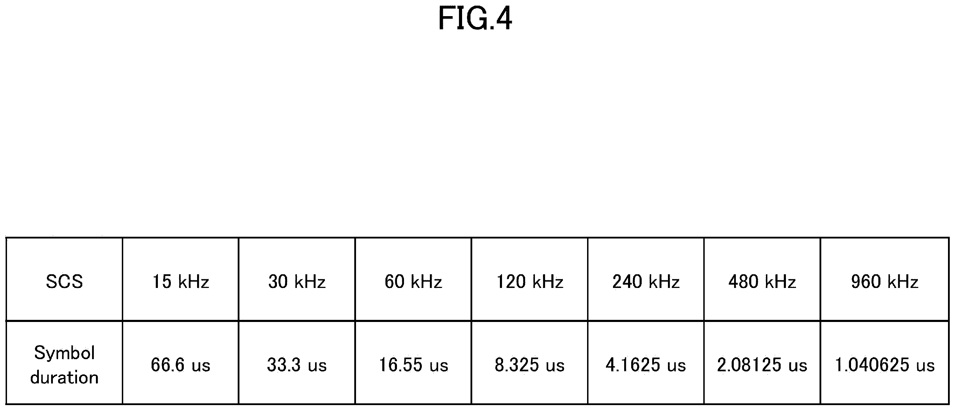

FIG. 4 is a diagram illustrating a relationship between SCSs and symbol lengths (time lengths of symbols). As shown in FIG. 4, the wider the SCS is, the shorter the symbol length (time length of the symbol) is. Further, if the number of symbols per slot is constant (i.e., 14 symbols), the slot length decreases as the SCS increases.

As described above, in the NR system assumed in the present embodiment, there is an SRS utilization method in which the base station 10 acquires a downlink CSI (channel state information) by using channel symmetry by an SRS (sounding reference signal) transmitted from the terminal 20. This usage of the SRS is referred to as antenna switching. This operation is referred to as DL CSI acquisition (downlink channel state information acquisition).

However, when beams are narrow and the number of the beams becomes large, and the SCS becomes wide, and when the terminal 20 and the base station 10 operate in accordance with the conventional rule, the terminal 20 may not appropriately perform SRS transmission operation for antenna switching.

Hereinafter, a technique for the terminal 20 to appropriately perform the SRS transmission operation for antenna switching by solving the above-described problem will be described.

### (Basic Operation and Details of Problem)

First, a basic operation example related to antenna switching of the SRS in the radio communication system of the present embodiment will be described.

In this embodiment, the terminal 20 is configured with one or more SRS resource sets via a higher-layer parameter SRS-ResourceSet from the base station 10. Each SRS resource set configures one or more SRS resources (higher-layer parameter SRS-Resource) (see Non-Patent Documents 1 and 2).

In addition to the one or more SRS resources mentioned above, the SRS-ResourceSet configures resourceType (periodic, aperiodic, semi-persistent) and usage (beam management, codebook-based, non-codebook-based transmission, antenna switching), etc.

Further, period, resource mapping (symbol position in slot, OFDM symbol length and the like), the number of SRS ports, repetitionFactor, transmissionComb and the like are configured by the SRS-Resource.

Note that, when a plurality of SRS ports are configured in one SRS resource, SRSs of the plurality of SRS ports are alternately (in an interleaved manner) mapped in the frequency domain in the same OFDM symbol.

When SRS is used for DL CSI acquisition, "antenna switching" is configured as the usage of the SRS-ResourceSet. The configuration of SRS resource set and SRS resource in antenna switching is determined according to a transmission and reception capability of the terminal 20 (supportedSRS-TxPortSwitch). This transmission and reception capability is a parameter transmitted from the terminal 20 to the base station 10, and examples include 1T2R, 2T4R, 1T4R, etc..

1T2R means that the terminal 20 can transmit SRS by one SRS port at a time (by the same symbol) and can receive a signal by two UE antenna ports at a time (by the same symbol). Alternatively, the 1T2R may be referred to as a configuration of one transmission antenna and two reception antennas. Here, each of the "transmission antenna" and the "reception antenna" may not correspond to one physical antenna. The one transmission antenna two reception antenna configuration includes, for example, a case where the terminal 20 includes two physical antennas, and the two antennas can simultaneously receive two signals and can simultaneously transmit only one signal. Further, 1T2R may be restated as a one transmission port and two reception port configuration or a one transmission and two reception configuration.

2T4R means that the terminal can transmit SRS by two SRS ports at a time (by the same symbol) and can receive a signal by four UE antenna ports at a time (by the same symbol). Alternatively, the 2T4R may be referred to as a two transmission antenna and four reception antenna configuration. Here, each of the "transmission antenna" and the "reception antenna" may not correspond to one physical antenna. The two transmission antenna and four reception antenna configuration includes, for example, a case where the terminal 20 includes four physical antennas, the four antennas can simultaneously receive four signals, two of the four antennas can transmit one signal, and the remaining two antennas can transmit one signal. Further, 2T4R may be restated as a two transmission port four reception port configuration or a two transmission four reception configuration. Other configurations such as the 1T4R are the same as described above.

As described in Non-Patent Document 1, when the capability of the terminal 20 is 1T2R, SRS is configured as follows in the existing technology.

"For 1T2R, up to two SRS resource sets configured with a different value for the higher layer parameter resourceType in SRS-ResourceSet set, where each set has two SRS resources transmitted in different symbols, each SRS resource in a given set consisting of a single SRS port, and the SRS port of the second resource in the set is associated with a different UE antenna port than the SRS port of the first resource in the same set,".

In addition, when the capability of the terminal 20 is 2T4R, SRS is configured as follows in the existing technology.

"For 2T4R, up to two SRS resource sets configured with a different value for the higher layer parameter resourceType in SRS-ResourceSet set, where each SRS resource set has two SRS resources transmitted in different symbols, each SRS resource in a given set consisting of two SRS ports, and the SRS port pair of the second resource is associated with a different UE antenna port pair than the SRS port pair of the first resource".

In addition, as described as "For 1T2R, 1T4R or 2T4R, the UE shall not expect to be configured or triggered with more than one SRS resource set with higher layer parameter usage set as 'antennaSwitching' in the same slot. For 1T=1R, 2T=2R or 4T=4R, the UE shall not expect to be configured or triggered with more than one SRS resource set with higher layer parameter usage set as 'antennaSwitching' in the same symbol.", a plurality of SRS resource sets are not configured in the same slot.

In the present embodiment, basically, operation is performed based on the same rule as described above, but a partially different operation as described later is performed.

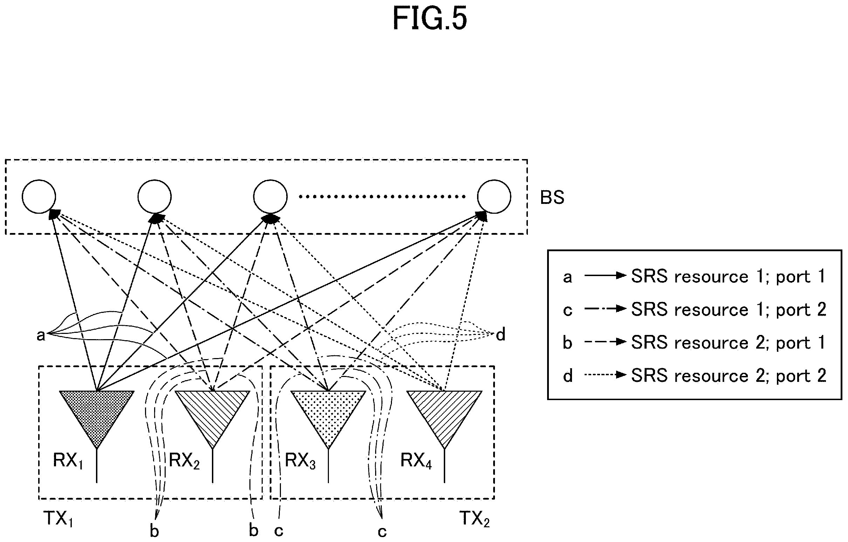

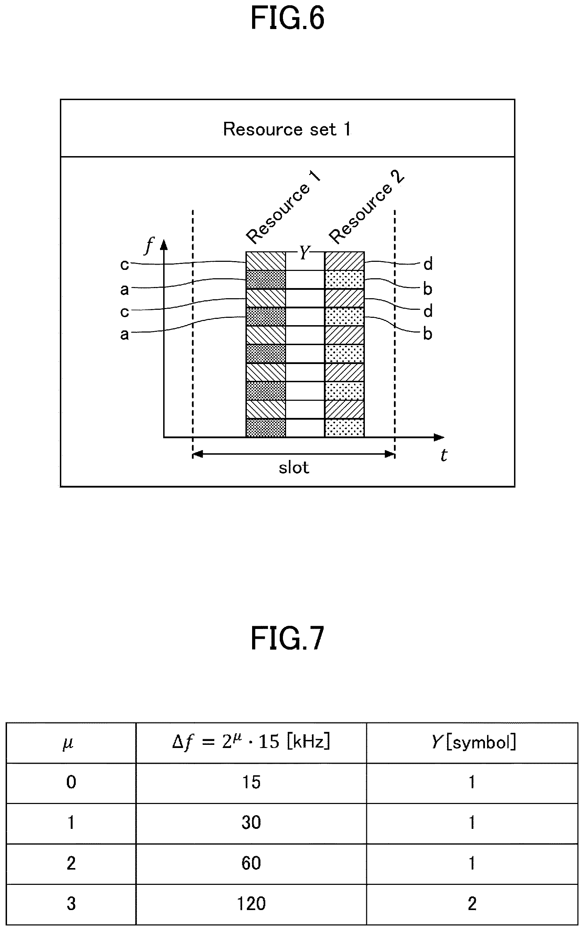

An example of an operation of antenna switching when the capability of the terminal 20 is 2T4R will be described with reference to FIGs. 5 and 6.

In the example shown in FIG. 5, the terminal 20 includes four antennas, and transmits two SRSs (signals indicated by "a" and "c") of SRS port 1 and SRS port 2 in SRS resource 1 using two antennas of the four antennas, and transmits two SRSs (signals indicated by "b" and "d") of SRS port 1 and SRS port 2 in SRS resource 2 using the remaining two antennas.

FIG. 6 shows the above situation in a resource diagram. As shown in FIG. 6, two SRSs (signals denoted by "a" and "c") of SRS port 1 and SRS port 2 are transmitted in the same symbol of SRS resource 1, and two SRSs (signals denoted by "d" and "b") of SRS port 1 and SRS port 2 are transmitted in the same symbol of SRS resource 2.

For example, a pair of SRS resource 1 and SRS port 1 can be associated with UE antenna port 0, a pair of SRS resource 1 and SRS port 2 can be associated with UE antenna port 1, a pair of SRS resource 2 and SRS port 1 can be associated with UE antenna port 2, and a pair of SRS resource 2 and SRS port 2 can be associated with UE antenna port 3. The base station 10 can acquire DL CSI of four signals (channels) by receiving the SRSs illustrated in FIGs. 5 and 6 based on symmetry of the channels.

As shown in FIG. 6, when SRSs are transmitted in a plurality of SRS resources (time resources to which SRSs are mapped) in one slot, a guard period of Y symbols, which is the minimum guard period, is configured between the SRS resources. The terminal 20 cannot transmit any signal during the guard period.

FIG. 7 shows values of Y defined in Non-Patent Document 1. As shown in FIG. 7, when SCS is 120 kHz, Y is defined to be 2 symbols, and the like.

The guard period is configured in the terminal 20, and the terminal 20 can determine not to transmit a signal during the guard period. In addition, it is assumed that the guard period is also configured in the base station 10, and the base station 10 performs configuration of a plurality of SRS resources on the terminal 20 so that the defined guard period can be secured.

However, as mentioned above, in the highfrequency bands assumed in this embodiment, SCS becomes wider than 120 kHz, and accordingly, the symbol length becomes shorter. Therefore, under the existing technical specifications as shown in FIG. 7, it is unclear for the terminal 20 and the base station 10 what kind of guard period should be secured for antenna switching operation, and there is a possibility that appropriate operation may not be possible.

Hereinafter, Examples 1 to 4 will be described as operation examples for solving this problem. Note that, although Examples 1 to 4 are based on the operation of antenna switching and the basic operations of the terminal 20 and the base station 10 are the same as those described above, values that are not used in the related art can be used for the guard period, the number of SRS resource sets to be configured, the number of SRS resources to be configured per one SRS resource set, and the like.

### (Example 1)

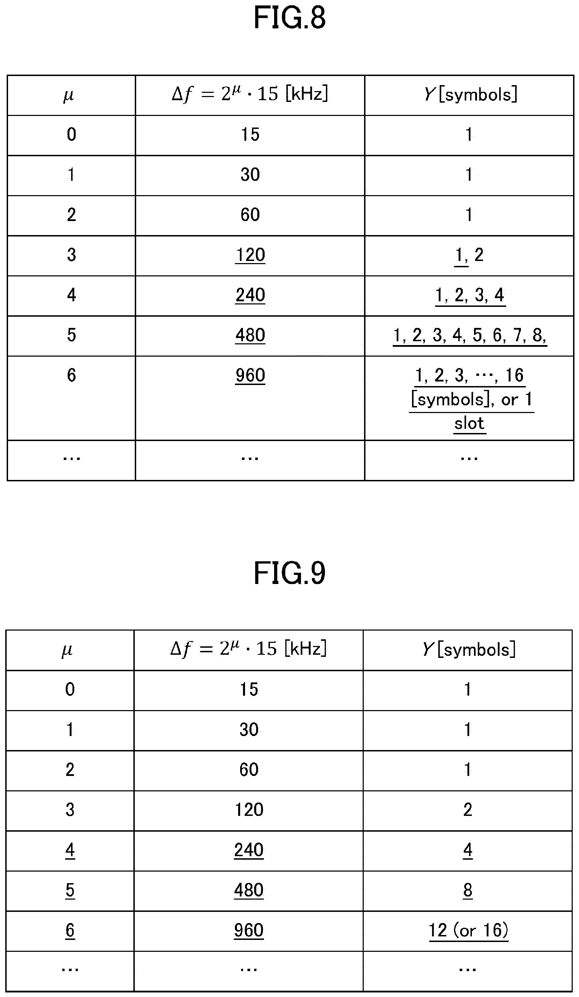

In Example 1, when the base station 20 configures a plurality of SRS resources in one SRS resource set, values as illustrated in FIG. 8 are defined as the minimum guard period (value of Y) between SRS resources. FIG. 8 shows candidate values of Y actually used in the terminal 20 and the base station 10.

In the example of FIG. 8, when SCS is 120 kHz, 1 or 2 is used as Y, and when SCS is 240 kHz, 1, 2, 3, or 4 is used as Y. In addition, when SCS is 480 kHz, 1, 2, 3, 4, 5, 6, 7, or 8 is used as Y, and when SCS is 960 kHz, 1, 2, 3,..., or 16 symbols, or 1 slot is used as Y.

For example, when the terminal 20 and the base station 10 are configured with Y=4 when SCS=480 kHz, the base station 10 configures a plurality of SRS resources such that a guard period between the plurality of SRS resources of an SRS resource set for antenna switching becomes 4 symbols at the minimum when SCS=480 kHz is used. In addition, when the terminal 10 performs SRS transmission using a plurality of SRS resources of the SRS resource set for antenna switching, the terminal 10 performs SRS transmission such that the transmission interval (guard period) of SRSs is 4 symbols at the minimum. Note that transmitting an SRS may be expressed as transmitting an SRS resource.

According to Example 1, it is possible to avoid allocation of inappropriate SRS resources (for example, a guard interval being too short).

Hereinafter, Example 1-1 to Example 1-3 will be described as more specific examples of Example 1.

### <Example 1-1>

In Example 1-1, table information including any one of the candidate values shown in FIG. 8 is defined in the technical specification or the like. The table information is configured in each of the terminal 20 and the base station 10. That is, the terminal 20 and the base station 10 each hold the table information in advance.

FIG. 9 illustrates an example of table information according to Example 1-1. In the example of FIG. 9, 4 is used as Y when SCS is 240 kHz, 8 is used as Y when SCS is 480 kHz, and 12 or 16 is used as Y when SCS is 960 kHz.

The information shown in FIG. 9 is an example. For example, when SCS is 240 kHz, Y may be 1, 2, or 3. When SCS is 480 kHz, Y may be 1, 2, 3, 4, 5, 6, or 7. When SCS is 960 kHz, Y may be 1, 2, 3, 4, 5, 6, 7, 8, 9, 10, 11, 13, or 14.

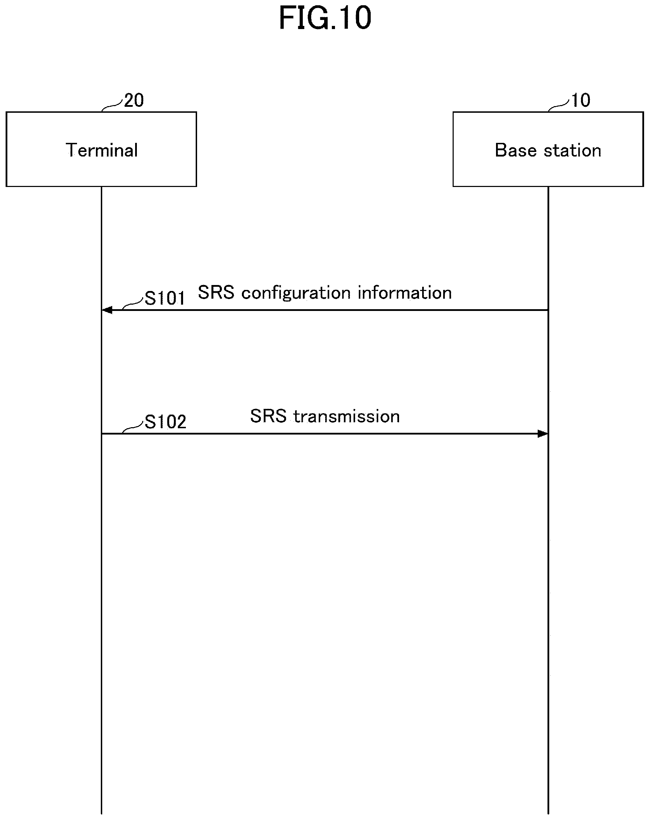

An operation example in Example 1-1 will be described with reference to FIG. 10. Here, it is assumed that the table information illustrated in FIG. 9 is configured in each of the terminal 20 and the base station 10. In addition, here, it is assumed that signal transmission and reception are performed between the terminal 20 and the base station 10 with SCS=480 kHz, and the base station 10 configures a plurality of SRS resources per one SRS resource set for the terminal 20.

When the base station 10 recognizes that the minimum guard period corresponding to 480 kHz is 8 symbols with reference to the table information of FIG. 9, the base station 10 transmits configuration information (usage = antenna switching) of an SRS resource set including a configuration of a plurality of SRS resources in which an interval between the plurality of SRS resources is equal to or greater than 8 symbols to the terminal 20 (S101).

The terminal 20 refers to the table information of FIG. 9, grasps that the minimum guard period corresponding to 480 kHz is 8 symbols, and transmits a plurality of SRSs at an interval of 8 symbols or more using a plurality of SRS resources configured by the base station 10 (S102). The base station 10 receives a plurality of SRSs with an interval of 8 symbols or more transmitted from the terminal 20.

The terminal 20 may perform SRS transmission in accordance with configuration information configured by the base station 10 without referring to the table information of FIG. 9. Even in this case, the terminal 10 transmits a plurality of SRSs at an interval of 8 symbols or more using a plurality of SRS resources configured by the base station 10.

### <Example 1-2>

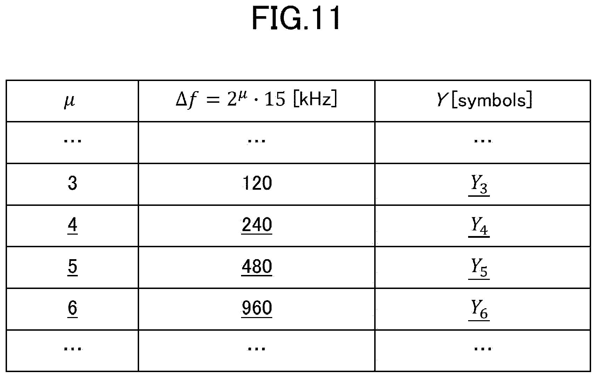

Next, Example 1-2 will be described. In Example 1-2, for example, the table information illustrated in FIG. 11 is defined in the technical specification or the like. The base station 10 and the terminal 20 hold the table information in advance.

As shown in FIG. 11, in this table information, the value of Y corresponding to each SCS is a variable. In Example 1-2, the value of the variable is determined from the values of the candidates of the variable by the UE capability (capability information of the terminal 20).

For example, in FIG. 11, the candidates of Y₃ are 1 and 2, the candidates of Y₄ are 1, 2, 3, and 4, the candidates of Y₅ are 1 to 8, and the candidates of Y₆ are 1 to 16.

For example, the terminal 20 transmits the capability information related to Y for each SCS to the base station 10, and the base station 20 determines Y for each SCS based on the capability information. The "capability information related to Y" may be the minimum value of Y that can be used by the terminal 20, may be the value of Y that the terminal 10 desires to use, or may be information other than Y.

As an example, when the terminal 20 notifies the base station 10 of Y₄=3 as the capability information related to Y for SCS=240 kHz, the base station 10 allocates a plurality of SRS resources to the terminal 20 using Y=3 in SCS=240 kHz.

The terminal 20 may transmit capability information regarding Y for a plurality of SCSs to the base station 20, and the base station 20 may determine the value of Y for SCS to be used based on the capability information. For example, the terminal 20 transmits capability information including four values such as (Y₃, Y₄, Y₅, Y₆) to the base station 20.

The base station 10 knows that the first value of the capability information is capability information related to Y in the case of 120 kHz, the second value is capability information related to Y in the case of 240 kHz, the third value is capability information related to Y in the case of 480 kHz, and the fourth value is capability information related to Y in the case of 960 kHz. The base station 20 determines the value of Y based on the capability information of Y corresponding to the SCS to be used. The "capability information related to Y" is as described above.

Note that, as for the operation of determining the value of Y based on the "capability information related to Y" in the base station 10, the same operation may be performed in the terminal 20. That is, the terminal 20 may determine the value of Y based on the capability information of the terminal 20.

In addition, the base station 10 may perform configuration of SRS resources for a plurality of terminals (configuration of multiplexing the SRS resources between the plurality of terminals) by using, for example, a value for the lowest capability information among a plurality of pieces of capability information received from the plurality of terminals. For example, SRS resources are configured for a plurality of terminals by assuming the value of Y for the lowest capability information.

Alternatively, the base station 10 may configure SRS resources for a plurality of terminals by using a value for the highest capability information among a plurality of pieces of capability information received from the plurality of terminals. For example, SRS resources may be configured for a plurality of terminals by assuming a value of Y for the highest capability information.

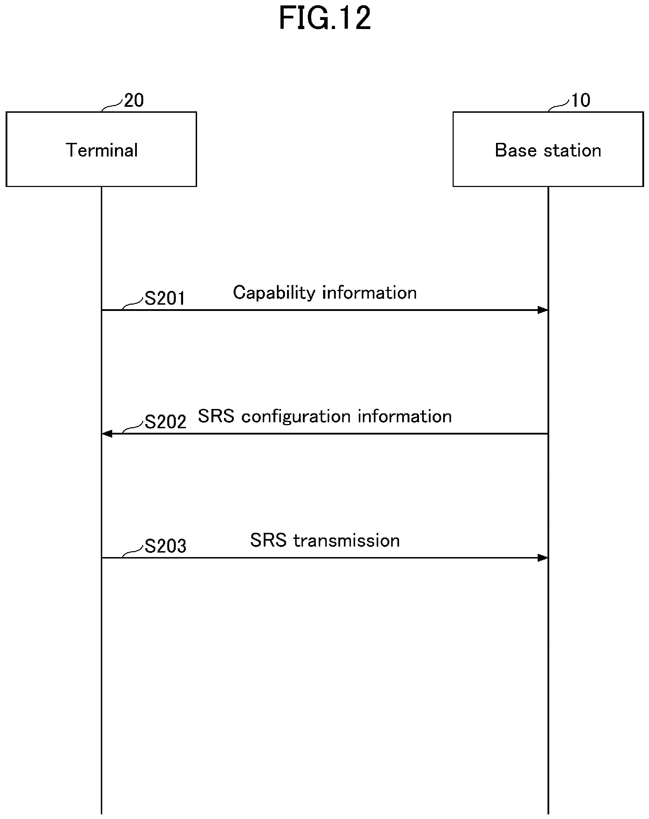

An operation example of Example 1-2 will be described with reference to FIG. 12. In S201, the terminal 20 transmits capability information to the base station 10. This capability information includes, for example, capability information related to Y for each SCS.

For example, when determining to use SCS=480 kHz for communication with the terminal 20, the base station 10 determines a value of Y corresponding to SCS=480 kHz based on the capability information related to Y received in S201, creates configuration information of multiple SRS resources using the value of Y, and transmits the configuration information to the terminal 20 (S202). In S203, the terminal 20 performs SRS transmission based on the configuration information received from the base station 10.

### <Example 1-3>

Next, Example 1-3 will be described. In Example 1-3, candidate values of Y for each SCS are notified from the base station 10 to the terminal 20 by RRC signaling. The terminal 20 determines a value of Y corresponding to the terminal 20 from the notified candidate values.

For example, as illustrated in FIG. 8, the base station 10 holds table information in which a value (candidate values in a case where there are a plurality of values) for each SCS is described. The base station 10 notifies the terminal 20 of the table information by RRC signaling.

The terminal 20 determines a value of Y to be actually used (referred to) corresponding to SCS to be used, for example, according to the capability information of the terminal 20. In the same way as Example 1-2, the base station 10 determines the value of Y for the terminal 20 based on the capability information related to Y received from the terminal 20.

Instead of the terminal 20 itself determining the value of Y, the base station 10 may notify the terminal 20 of the value of Y (which may be an index designating information in the table information configured by RRC) determined based on, for example, the capability information of the terminal 20, by a MAC CE or a DCI.

### (Example 2)

Next, Example 2 will be described. Example 2 may be implemented in combination with Example 1 or may be implemented independently of Example 1.

In the technique defined in Non-Patent Document 1, in 1T2R, 2T4R, 1T4R, and the like, the number of SRS resources in the SRS resource set for antenna switching is 2 or 4. In the technique defined in Non-Patent Document 1, up to the two SRS resources can be configured by one SRS resource set in the terminal 20.

On the other hand, in Example 2, the technical specification or the like defines that up to N SRS resources are configured in the SRS resource set for antenna switching, and the terminal 20 and the base station 10 operate according to the definition. More specifically, for example, the following regulations are made, and the terminal 20 and the base station 10 operate according to the regulations.

"For xTyR, z SRS resource sets configured with a different value for the higher layer parameter resourceType in SRS-ResourceSet, where each SRS resource set has at most N SRS resources/port,...."

That is, it is defined that z SRS resource sets are configured for the terminal 20 having a capability of x transmissions and y receptions, and up to N SRS resources are configured for each SRS port in each SRS resource set, and the terminal 20 and the base station 10 operate according to the definition. Note that "up to N SRS resources per SRS port" may be "up to N SRS resources per slot". The fact that "up to N SRS resources per SRS port" may be "up to N SRS resources per slot" is the same in the following description.

Hereinafter, Examples 2-1 to 2-4 will be described as more specific examples for x, y, z, and N.

### <Example 2-1>

Example 2-1 is an embodiment of the number z of SRS resource sets configured for the terminal 20. Examples 2-1-1 to 2-1-3 will be described below as variations.

### <Example 2-1-1>

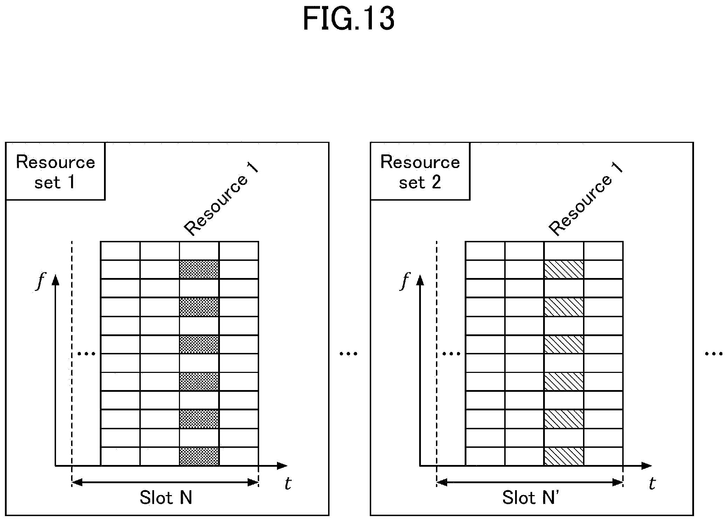

In Example 2-1-1, the number z of SRS resource sets configured for the terminal 20 is defined as a fixed value. The terminal 20 and the base station 10 operate according to the fixed value. As an example, FIG. 13 illustrates an example of an SRS resource configured from the base station 10 to the terminal 20 in a case of z=2 and N=1.

In FIG. 13, SRS resource set 1 is configured in a certain slot N, and SRS resource set 2 is configured in another slot N'. In this example, SRS resource 1 in the slot N is configured by the SRS resource set 1, and SRS resource 1 in the slot N' is configured by the SRS resource set 2.

In this example, as shown in FIG. 13, the SRS resource 1 of the SRS resource set 1 and the SRS resource 1 of the SRS resource set 2 are at the same position in one slot. The terminal 20 in which such SRS resources are configured for antenna switching can transmit a plurality of SRS resources for DL CSI acquisition at an interval of one slot (for example, 14 symbols) or more.

In addition, when the terminal 20 performs transmission of a plurality of SRS resources within one slot, the terminal 20 cannot transmit a signal between SRS resources, but in the configuration illustrated in FIG. 13, one SRS resource transmission is performed per one slot, and thus a guard period during which a signal cannot be transmitted does not occur. Therefore, the number of symbols that cannot be used for transmission can be reduced.

### <Example 2-1-2>

In Example 2-1-2, the number z of SRS resource sets configured for the terminal 20 is defined as a fixed value based on x and y in xTyR which is the transmission and reception capability of the terminal 20. The terminal 20 and the base station 10 operate according to the fixed value.

For example, z=ceil(y/x) may be used, or z=floor(y/x) may be used. Ceil is rounded up and floor is rounded down. For example, in the case of 2T4R, z=2 is obtained by any of the equations. At this time, if N = 1, the same SRS resource configuration as in FIG. 13 is performed.

### <Example 2-1-3>

The number z of SRS resource sets configured for the terminal 20 may be determined by the base station 10, for example, and the determined value of z may be notified to the terminal 20 as the number of SRS resource sets for antenna switching by RRC signaling. The terminal 20 that has received z can assume that z SRS resource sets are configured for the antenna switching.

The base station 10 can determine the value of z based on x and y in xTyR that is the transmission and reception capability received from the terminal 20, for example, as described in Example 2-1-2.

The base station 10 may notify the terminal 20 of a plurality of candidate values of z by RRC signaling and notify the terminal 20 of a value of z to be actually used by a MAC CE or a DCI.

### <Example 2-2>

In Example 2-2, variations of a description method of a portion related to z in a case where z is defined in a technical specification or the like will be described as Examples 2-2-1 to 2-2-3. In any case, the terminal 20 and the base station 10 operate in accordance with the description. In any case, z below may be determined by, for example, the method described in Example 2-1-2.

### <Example 2-2-1>

The description examples of Example 2-2-1 is as follows.

"For xTyR, zSRS resource sets configured with a different value for the higher layer parameter resourceType in SRS-ResourceSet, where each SRS resource set has at most N SRS resources/port, ..."

Z is a fixed value. That is, it is defined that z SRS resource sets are configured for the terminal 20 having the capability of x transmissions and y receptions.

### <Example 2-2-2>

The description example of Example 2-2-2 is as follows.

"For xTyR, at least z SRS resource sets configured with a different value for the higher layer parameter resourceType in SRS-ResourceSet, where each SRS resource set has at most N SRS resources/port, ..."

That is, it is defined that the terminal 20 having the capability of x transmissions and y receptions is configured with at least z SRS resource sets.

### <Example 2-2-3>

The description example of Example 2-2-3 is as follows.

" For xTyR, a value from z1 to z2 of SRS resource sets configured with a different value for the higher layer parameter resourceType in SRS-ResourceSet, where each SRS resource set has at most N SRS resources/port, ..."

That is, it is defined that the terminal 20 having the capability of x transmissions and y receptions is configured with the number of SRS resource sets of a value in a range of z1 to z2.

### <Example 2-3>

Next, Example 2-3 will be described. In Example 2, as described above, up to N SRS resources are configured in each SRS resource set for antenna switching, and in Example 2-3, an example of how to determine N will be described. Hereinafter, Examples 2-3-1 to 2-3-4 will be described as variations.

### <Example 2-3-1>

In Example 2-3-1, the upper limit N of the number (or the value N of the number) of SRS resources in each SRS resource set configured for the terminal 20 is defined as a fixed value. The fixed value is, for example, 1, 2, or 3. Assuming that N=1 and the number of SRS resource sets is 2, the same configuration as that shown in FIG. 13 is performed.

### <Example 2-3-2>

In Example 2-3-2, the upper limit N of the number (or the value N of the number) of SRS resources in each SRS resource set configured for the terminal 20 is defined as a fixed value as a value based on y in xTyR which is the transmission and reception capability of the terminal 20. The terminal 20 and the base station 10 operate according to the fixed value.

As an example, if y is greater than a value Y' (e.g., 2), then N is defined as a specific value N' (e.g., 1). In this example, Y' and N' may be defined in advance, and N may not be defined in advance.

For example, the base station 10 compares y and Y' based on the capability information xTyR received from the terminal 20, and determines N as a specific value N' (for example, 1) when y is larger than a certain value Y' (for example, 2). The base station 10 performs configuration of SRS resources as illustrated in FIG. 13, for example, based on the determined value.

The terminal 20 also compares y with Y' based on the capability information xTyR of the terminal 20, and determines N as a specific value N' (for example, 1) if y is larger than a certain value Y' (for example, 2). The terminal 20 assumes that SRS resources are configured as illustrated in FIG. 13, for example, based on the determined value.

### <Example 2-3-3>

In Example 2-3-3, the upper limit N of the number of SRS resources (or the value N of the number) in each SRS resource set configured for the terminal 20 is determined by, for example, the base station 10, and the base station 10 notifies the terminal 20 of the upper limit N by RRC signaling (or a MAC CE or a DCI).

The base station 10 may determine N by the same method as the method described in Example 2-3-2, for example.

That is, the base station 10 compares y and Y' based on the capability information xTyR received from the terminal 20, and if y is larger than a certain value Y' (for example, 2), determines N as a specific value N' (for example, 1) and notifies the terminal 20 of N. The terminal 20 can assume that SRS resource configuration as illustrated in FIG. 13 is performed, for example.

Instead of or in addition to notifying the terminal 20 of N, the base station 10 may notify the terminal 20 of Y' and N' by RRC signaling (or a MAC CE or a DCI). The terminal 20 compares y and Y' based on the capability information xTyR of the terminal 20, and determines N as N' (for example, 1) when y is larger than Y' (for example, 2).

### <Example 2-3-4>

In Example 2-3-4, whether or not N is set to a specific value N' (for example, 1) is determined depending on whether or not the terminal 20 is provided with (or configured with) a multi-panel antenna.

For example, when the base station 10 determines that the terminal 20 is provided with a multi-panel antenna based on the capability information from the terminal 20, the base station 10 determines N as N' and performs configuration of SRS resource (for example, FIG. 13).

### <Example 2-4>

Next, Example 2-4 will be described. In Example 2, as described above, it is defined that up to N SRS resources are configured in each SRS resource set for antenna switching, but in Example 2-4, a condition to which such a definition is applied (that is, a condition for performing an operation based on this definition) will be described. Hereinafter, Examples 2-4-1 to 2-4-5 will be described as variations.

The "specific operation" described below may be the operation of Example 2-1, the operation of Example 2-2, or the operation of Example 2-3. Further, the "specific operation" described below may be the operation of Example 1-1 or the operation of Example 1-2. Further, any two or more of Examples 2-4-1 to 2-4-5 may be combined and applied. In the following example, each of the terminal 20 and the base station 10 performs condition determination, but one of them (for example, the base station 10) may perform the condition determination and notify the other (for example, the terminal 20) of the result (performing the specific operation).

### <Example 2-4-1>

In Example 2-4-1, each of the terminal 20 and the base station 10 performs a specific operation when SCS used for transmission and reception of a signal is larger (or smaller) than a specific value. For example, each of the terminal 20 and the base station 10 performs a specific operation when SCS used for signal transmission and reception is larger than 120 kHz (or 240 kHz).

### <Example 2-4-2>

In Example 2-4-2, the terminal 20 and the base station 10 each perform a specific operation when the Frequency Range (FR) for use includes a frequency band higher than a certain value. For example, the terminal 20 and the base station 10 each perform a specific operation when the Frequency Range (FR) for use includes a frequency band higher than 52.5 GHz.

### <Example 2-4-3>

In Example 2-4-3, the terminal 20 and the base station 10 each determine whether to perform the specific operation according to whether x (or y) is smaller (or larger) than a specific value in xTyR which is the transmission and reception capability of the terminal 20. For example, each of the terminal 20 and the base station 10 determines to perform the specific operation when y (which may be referred to as the number of UE antenna ports) in xTyR, which is the transmission and reception capability of the terminal 20, is smaller than a specific value y1. y1 may be 2, 3, or a value larger than 3.

### <Example 2-4-4>

In Example 2-4-4, the terminal 20 and the base station 10 each determine whether to perform the specific operation according to whether a difference or a ratio between x and y is greater (or smaller) than a specific value in xTyR which is the transmission and reception capability of the terminal 20. For example, each of the terminal 20 and the base station 10 determines to perform the specific operation when x/y in xTyR that is the transmission and reception capability of the terminal 20 is larger than a specific value r. The value of r may be 0.5, 0.33, or another value.

### <Example 2-4-5>

In Example 2-4-5, each of the terminal 20 and the base station 10 determines whether to perform the specific operation based on the capability information (UE capability) of the terminal 20. For example, the terminal 20 may transmit capability information indicating whether or not the terminal 20 can execute a specific operation to the base station 10, and the base station 10 may notify the terminal 20 of a determination result (example: execute the specific operation) based on the capability information by RRC signaling (or a MAC CE or a DCI).

### (Example 3)

Next, Example 3 will be described. Example 3 may be implemented in combination with Example 1 or may be implemented independently of Example 1. Example 3 may be implemented in combination with Example 2 or may be implemented independently of Example 2. Example 3 may be implemented in combination with Example 1 and Example 2 or may be implemented independently of both Example 1 and Example 2.

In the technique defined in Non-Patent Document 1, the number of SRS resources in the SRS resource set for antenna switching is two in 1T2R, 2T4R, and the like.

On the other hand, in Example 3, the technical specification or the like defines that the number of SRS resources greater than two can be configured in the SRS resource set for antenna switching, and the terminal 20 and the base station 10 operate according to the definition. It is not assumed that two or more SRS resource sets are configured in the same slot. More specifically, for example, the following regulations are made, and the terminal 20 and the base station 10 operate according to the regulations.

"For xTyR, up to z SRS resource set(s) configured with a different value for the higher layer parameter resourceType in SRS-ResourceSet, where each SRS resource set has up to three SRS resources transmitted in different symbols, each SRS resource in a given set consisting of two SRS ports, and the SRS port pair of the second resource is associated with a different UE antenna port pair than the SRS port pair of the first resource"

That is, it is defined that z SRS resource sets are configured for the terminal 20 having the capability of x transmissions and y receptions, and up to N SRS resources are configured for each SRS resource set, and the terminal 20 and the base station 10 operate according to the definition. N is, for example, 3. Z is, for example, 1. Z may be determined in the manner described in Example 2.

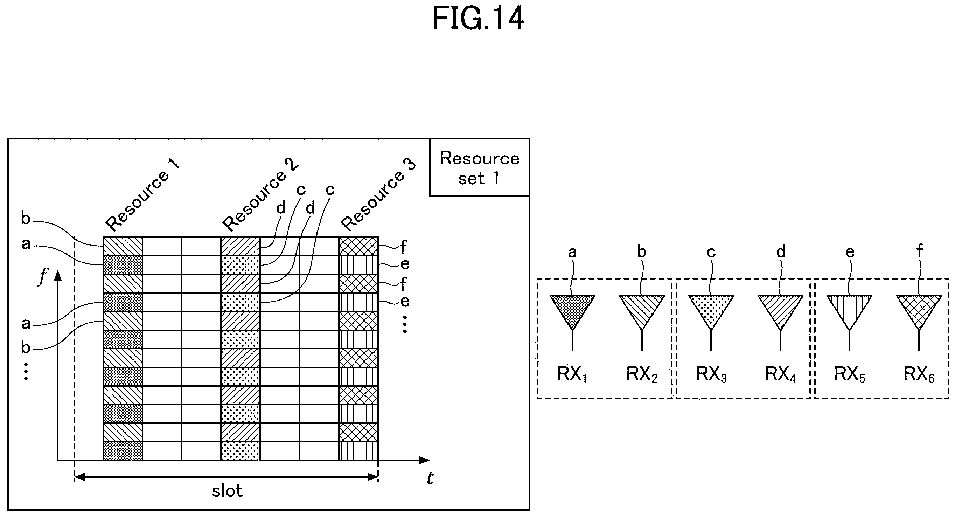

As an example, FIG. 14 illustrates an example of an SRS resource set (and SRS resources included therein) configured from the base station 10 to the terminal 20 in a case of z=1 and N=3. This example is an example of a case where the terminal 20 has the capability of 2T6R.

In FIG. 14, SRS resource 1, SRS resource 2, and SRS resource 3 are configured in one slot. For example, the terminal 20 performs SRS transmission using SRS port 0 and SRS port 1 in the SRS resource 1 (a and b in FIG. 14), performs SRS transmission using the SRS port 0 and the SRS port 1 in the SRS resource 2 (c and d in FIG. 14), and performs SRS transmission using the SRS port 0 and the SRS port 1 in the SRS resource 3 (e and f in FIG. 14).

In this way, since the number of SRS resources greater than two can be configured in one SRS resource set, in antenna switching, that is, in DL CSI acquisition, the terminal 20 can perform SRS transmission a larger number of times in a short period (within one slot). However, since it is necessary to provide the guard period as described in Example 1, there is an upper limit in the number of SRS resources that can be configured in one SRS resource set. The upper limit is, for example, 3. The upper limit may be 4, 5, 6, or 7, depending on SCS.

Although FIG. 14 shows an example in which SRS is transmitted three times in one slot, the same transmissions as the transmissions in one slot in FIG. 14 may be performed in a plurality of slots. The transmissions in the plurality of slots may be a repetition of the SRS resource set 1 shown in FIG. 14, or may be transmissions by an SRS resource set different from the SRS resource set 1.

### <Application Conditions>

In Example 3, as in Examples 2 to 4, a condition for performing a specific operation may be used. Here, Example 3-1 to Example 3-5 will be described as variations. The "specific operation" described below is the operation of Example 3. In the following example, each of the terminal 20 and the base station 10 performs condition determination, but one of them (for example, the base station 10) may perform the condition determination and notify the other (for example, the terminal 20) of the result (performing the specific operation).

### <Example 3-1>

In Example 3-1, each of the terminal 20 and the base station 10 performs a specific operation when SCS used for transmission and reception of a signal is larger (or smaller) than a specific value. For example, each of the terminal 20 and the base station 10 performs a specific operation when SCS used for transmission and reception of a signal is larger than 120 kHz (or 240 kHz).

### <Example 3-2>

In Example 3-2, each of the terminal 20 and the base station 10 performs a specific operation when a frequency range (FR) to be used includes a band of a frequency larger than a specific value. For example, each of the terminal 20 and the base station 10 performs a specific operation when a frequency range (FR) to be used includes a band of a frequency larger than 52.5 GHz.

### <Example 3-3>

In Example 3-3, each of the terminal 20 and the base station 10 determines whether to perform a specific operation according to whether x (or y) is greater than (or less than) a specific value in xTyR which is the transmission and reception capability of the terminal 20. For example, each of the terminal 20 and the base station 10 determines to perform the specific operation when y (which may be referred to as the number of UE antenna ports) in xTyR, which is the transmission and reception capability of the terminal 20, is greater than a specific value y1. y1 may be 1, 2, 3, or a value larger than 3.

### <Example 3-4>

In Example 3-4, each of the terminal 20 and the base station 10 determines whether to perform the specific operation according to whether a difference or a ratio between x and y is smaller (or larger) than a specific value in xTyR which is the transmission and reception capability of the terminal 20. For example, each of the terminal 20 and the base station 10 determines to perform the specific operation when x/y in xTyR that is the transmission and reception capability of the terminal 20 is smaller than a specific value r. The value of r may be 0.5, 0.33, or another value.

### <Example 3-5>

In Example 3-5, each of the terminal 20 and the base station 10 determines whether to perform the specific operation based on the capability information (UE capability) of the terminal 20. For example, the terminal 20 may transmit capability information indicating whether or not the terminal 20 can execute a specific operation to the base station 10, and the base station 10 may notify the terminal 20 of a determination result (example: execute the specific operation) based on the capability information by RRC signaling (or a MAC CE or a DCI).

By any of Examples 1 to 3, the terminal 20 can appropriately perform SRS transmission for acquiring channel state information of downlink.

### (Example 4)

Next, Example 4 will be described. Example 4 may be implemented in combination with Example 1 or may be implemented independently of Example 1. Example 4 may be implemented in combination with Example 2 or may be implemented independently of Example 2. Example 4 may be implemented in combination with Example 3 or may be implemented independently of Example 3. Further, Example 4 may be implemented in combination with any two of Examples 1 to 3, or all of Example 1 to 4 may be implemented in combination. Hereinafter, an example of a case where Example 4 is implemented in combination with Example 1 will be described as an example.

As described in Example 1, a value larger than a conventional value can be used as the minimum guard period (the number of guard symbols) between SRS resources in DL CSI acquisition (usage=antennaSwitching). For example, as shown in FIGs. 8 and 9, when SCS is 480 kHz, 8 symbols can be used as the guard period, and when SCS is 960 kHz, 16 symbols can be used as the guard period. However, the conventional technique (conventional technical specification) does not cover the number of SRS resources or the number of SRS resource sets that can support such a large number of guard symbols. A technique for solving this problem will be described in Example 4.

Here, as x and y in the antenna configuration xTyR, for example, (x, y) = (1, 1), (1, 2), (2, 2), (1, 4), (2, 4), (3, 4), (4, 4), (1, 6), (1, 8), (2, 6), (2, 8), and (4, 8) are assumed.

Hereinafter, for DL CSI acquisition (usage = antennaSwitching), the number of SRS resource sets when SCS is 480 kHz will be described as Example 4-1, and the number of SRS resource sets when SCS is 480/960 kHz will be described as Example 4-2.

The overall operation of Example 4 is the same as that of the other Examples, for example, as shown in FIGs. 10 and 12. That is, the terminal 20 receives configuration information of SRS from the base station 10 and transmits SRS to the base station 10.

### <Example 4-1>

In Example 4-1, from the base station 10 to the terminal 20, up to five SRS resource sets (at most 5 SRS-ResourceSets) are configured. Each SRS resource set may be configured in a different slot, or a plurality of SRS resource sets may be configured in one slot.

The SRS resource sets of at most 5 are examples of "SRS resource sets of at most a number larger than a specific value". Here, the "specific value" is, for example, 2. In Example 4-1, "up to five SRS resource sets" is an example. For example, in a case where "at most z SRS resource sets (at most z SRS ResourceSets) are configured from the base station 10 to the terminal 20" in Example 4-1, z may be any value of 3, 4, 6, 7, and 8. Further, z may be a value larger than 8.

Examples 4-1-1 to 4-1-3 will be described below as more specific examples. Examples 4-1-1 to 4-1-3 can be implemented in any combination. It should be noted that, in Example 4-1, each port in each SRS resource may be associated with a different UE antenna port.

### <Example 4-1-1>

The value of the number of SRS resource sets configured for the terminal 20 is, for example, 5 for the terminal 20 having the transmission and reception capability of 1T8R, and 3 for the terminal 20 having the transmission and reception capability of 1T6R. The value of the number of SRS resource sets configured for the terminal 20 is, for example, 2 for the terminal 20 having the transmission and reception capability of any of 1T4R, 2T8R, and 2T6R.

The value of the number of SRS resource sets configured for the terminal 20 having a transmission and reception capability other than the above is, for example 1.

### <Example 4-1-2>

The number of SRS resources per SRS resource set configured for the terminal 20 whose transmission and reception capability is any one of 1T8R, 1T6R, 2T2R, and 2T4R is, for example, 2 at the maximum.

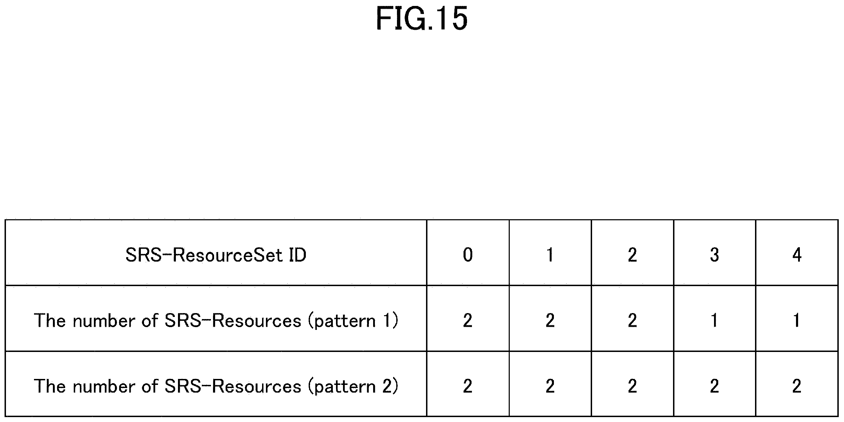

The number of SRS resources to be configured may be defined for each SRS resource set (ID thereof). For example, when five SRS resource sets (ID=0 to 4) are configured for the terminal 20 of 1T8R, the relationship between the SRS resource set and the number of SRS resources for each SRS resource set may be the relationship illustrated in the table of FIG. 15. FIG. 15 shows two types of relationships, pattern 1 and pattern 2. Which of the pattern 1 and the pattern 2 to use may be configured in advance in the base station 10.

The number of SRS resources per SRS resource set configured for the terminal 20 whose transmission and reception capability is one of 4T8R and 4T4R is, for example, 4 at the maximum.

### <Example 4-1-3>

The application of the configuration described in the above Examples 4-1-1 and 4-1-2 may be limited to a case where a specific condition is satisfied.

The specific condition may be a condition related to resourceType (resourceType (aperiodic/periodic/semi-persistent)) of SRS. For example, the configuration described in Example 4-1-1 and Example 4-1-2 may be applied only to aperiodic SRS. For example, the configuration described in Example 4-1-1 and Example 4-1-2 may be applied only to periodic SRS. For example, the configuration described in Example 4-1-1 and Example 4-1-2 may be applied only to semi-persistent SRS.

The specific condition may be a condition related to a capability of the terminal (UE capability). For example, the configuration described in Example 4-1-1 and Example 4-1-2 may be applied only to the terminal 20 capable of performing SRS transmission in any symbol in a slot.

### <Example 4-2>

In Example 4-2 in which SCS is 480 or 960 kHz, a maximum of eight SRS resource sets (at most 8 SRS-ResourceSets) are configured from the base station 10 to the terminal 20. Each SRS resource set may be configured in a different slot, or a plurality of SRS resource sets may be configured in one slot. The SRS resource sets of up to eight are examples of "SRS resource sets of up to a number larger than a specific value". Here, the "specific value" is, for example, 2. In Example 4-2, "up to eight SRS resource sets" is an example. For example, in the case where "at most z SRS resource sets (at most z SRS ResourceSets) are configured from the base station 10 to the terminal 20" in Example 4-2, z may be any value of 3, 4, 5, 6, 7, 9, 11, 12, 13, 14, 15, and 16. Further, z may be a value larger than 16.

Hereinafter, Examples 4-2-1 to 4-2-3 will be described as more detailed examples. The Examples 4-2-1 to 4-2-3 can be implemented in any combination. It should be noted that, in Example 4-2, each port in each SRS resource may be associated with a different UE antenna port.

### <Example 4-2-1>

The value of the number of SRS resource sets configured for the terminal 20 is, for example, 8 for the terminal 20 having the transmission and reception capability of 1T8R, and 6 for the terminal 20 having the transmission and reception capability of 1T6R. The value of the number of SRS resource sets configured for the terminal 20 is, for example, 4 for the terminal 20 having the transmission and reception capability of any one of 1T4R and 2T8R.

The value of the number of SRS resource sets configured for the terminal 20 is, for example, 3 for the terminal 20 having the transmission and reception capability of 2T6R, and 2 for the terminal 20 having the transmission and reception capability of any of 4T8R, 2T4R, and 1T2R.

The value of the number of SRS resource sets configured for the terminal 20 having a transmission and reception capability other than the above is 1, for example.

### <Example 4-2-2>

The number of SRS resources per SRS resource set configured for the terminal 20 is 1 for every xTyR that is assumed. In this case, for example, as shown in FIG. 13, SRS transmission using one SRS resource in one slot can be performed.

In addition, in Example 4-2-2, an SRS resource set in which the number of SRS resources is 2 (or a number larger than 2) may be included in a plurality of SRS resource sets.

### <Example 4-2-3>

The application of the configuration described in the above Examples 4-2-1 and 4-2-2 may be limited to a case where a specific condition is satisfied.

The specific condition may be a condition related to a resourceType (resourceType (aperiodic/periodic/semi-persistent)) of SRS. For example, the configuration described in Example 4-2-1 and Example 4-2-2 may be applied only to aperiodic SRS. For example, the configuration described in Example 4-2-1 and Example 4-2-2 may be applied only to periodic SRS. For example, the configuration described in Example 4-2-1 and Example 4-2-2 may be applied only to semi-persistent SRS.

The specific condition may be a condition related to the capability of the terminal (UE capability). For example, the configuration described in Example 4-2-1 and Example 4-2-2 may be applied only to the terminal 20 capable of performing SRS transmission only in the last 6 symbols in a slot.

### (Application Condition of SRS Antenna Switching)

As an example applicable to any of Examples 1 to 4, an application condition of the SRS antenna switching will be described.

In a high frequency band (for example, 52.6 -71 GHz), SRS antenna switching (DL CSI acquisition by SRS) may be applied (supported) when any one or more of the following five conditions (options 1 to 5) are satisfied. The following thresholds X, Y, and Z are all integers equal to or greater than 0, and may be values defined in the technical specification, or may be values notified from the base station 10 to the terminal 20 by RRC, a MAC CE, or a DCI.

### Option 1:

The number of reception ports (Rx ports) of the terminal 20 is smaller than the threshold X (or larger than the threshold X).

### Option 2:

The ratio of the number of transmission ports (Tx ports) to the number of reception ports (the number of Tx ports/the number of Rx ports) in the terminal 20 is smaller than the threshold Y (or larger than the threshold Y). Alternatively, the ratio of the number of reception ports to the number of transmission ports (the number of Rx ports/the number of Tx ports) in the terminal 20 is smaller than the threshold Y (or larger than the threshold Y).

### Option 3:

The number of transmission ports (Tx ports) of the terminal 20 is smaller than the threshold Z (or larger than the threshold Z).

### Option 4:

SCS is 120 kHz or 480 kHz.

### Option 5:

SCS is 120 kHz, 480 kHz, or 960 kHz.

When the application condition of SRS antenna switching is not satisfied, SRS antenna switching (DL CSI acquisition by SRS) is not supported in the high frequency band (for example, 52.6-71 GHz).

When the application condition of SRS antenna switching is not satisfied, "antennaSwitching" may not be used as usage of SRS.

### (Other Examples)

In any of Examples 1 to 4, the Example may be applied only when the terminal 20 reports capability information indicating that the terminal 20 supports SRS antenna switching to the base station 10.

In any of Examples 1 to 4, the Example may be applied only when the terminal 20 reports capability information indicating that the terminal 20 supports the operation in the high frequency band (for example, 52.6-71 GHz) to the base station 10.

In any of Examples 1 to 4, the Example may be applied only when the terminal 20 reports capability information indicating that the terminal 20 supports SRS antenna switching and supports the operation in the high frequency band (for example, 52.6-71 GHz) to the base station 10.

Supporting the operation of the high frequency band (for example, 52.6-71 GHz) may mean supporting both UL and DL operations in the high frequency band (for example, 52.6-71 GHz).

Further, supporting the operation of the high frequency band (for example, 52.6-71 GHz) may mean supporting the operation of the high frequency band (for example, 52.6-71 GHz) in any one or more of 120 kHz, 480 kHz, and 960 kHz.

In addition, in any of Examples 1 to 4, the usage of the SRS resource set may be limited to antennaSwitching.

### (Apparatus Configuration)

Next, functional configuration examples of the base station 10 and the terminal 20 that execute the processes and operations described above will be described.

### <Base station 10>

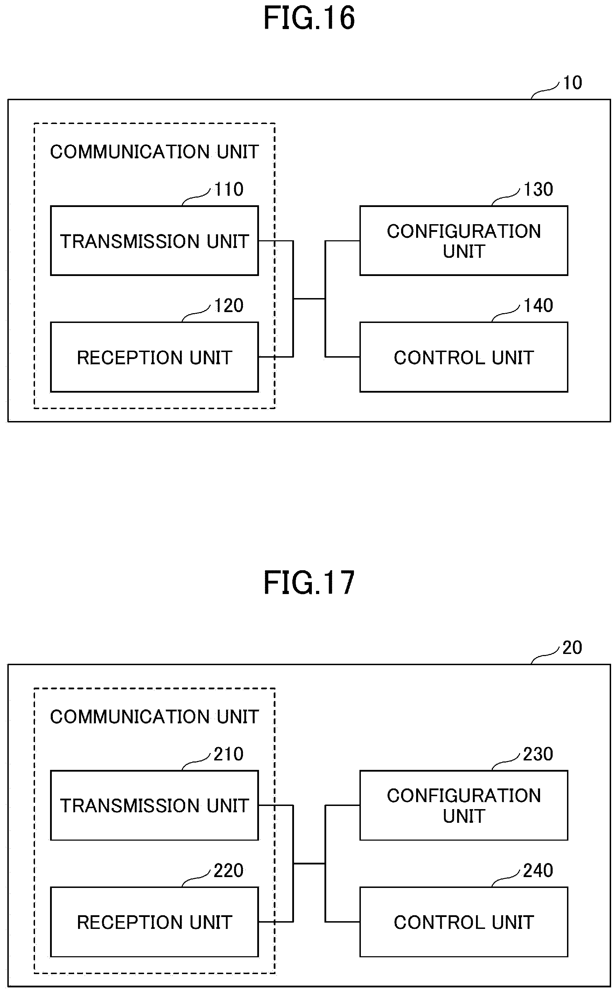

FIG. 16 is a diagram illustrating an example of a functional configuration of the base station 10. As illustrated in FIG. 16, the base station 10 includes a transmission unit 110, a reception unit 120, a configuration unit 130, and a control unit 140. The functional configuration shown in FIG. 20 is merely an example. The functional sections and the names of the functional units may be any name as long as the operations according to the embodiment of the present invention can be executed. The transmission unit 110 and the reception unit 120 may be collectively referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signal, DCI by PDCCH, data by PDSCH, and the like to the terminal 20.

The configuration unit 130 stores configuration information set in advance and various kinds of configuration information to be transmitted to the terminal 20 in a storage device included in the configuration unit 130, and reads the configuration information from the storage device as necessary.

The control unit 140 performs scheduling of DL reception or UL transmission of the terminal 20 via the transmission unit 110. The control unit 140 also includes a function of generating configuration information of an SRS resource. The functional unit related to signal transmission in the control unit 140 may be included in the transmission unit 110, and the functional unit related to signal reception in the control unit 140 may be included in the reception unit 120. The transmission unit 110 may be referred to as a transmitter, and the reception unit 120 may be referred to as a receiver.

### <Terminal 20>

FIG. 17 is a diagram illustrating an example of a functional configuration of the terminal 20. As illustrated in FIG. 17, the terminal 20 includes a transmission unit 210, a reception unit 220, a configuration unit 230, and a control unit 240. The functional configuration shown in FIG. 17 is merely an example. The functional sections and the names of the functional units may be any as long as the operations according to the embodiment of the present invention can be executed. The transmission unit 210 and the reception unit 220 may be collectively referred to as a communication unit.

The transmission unit 210 creates a transmission signal from the transmission data and transmits the transmission signal by radio. The reception unit 220 receives various signals by radio and acquires a signal of a higher layer from the received signal of the physical layer. Also, the reception unit 220 has a function of receiving NR-PSS, NR-SSS, NR-PBCH, DL/UL/SL control signal, DCI by PDCCH, data by PDSCH and so on, transmitted from the base station 10. For example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to other terminals 20 as D2D communication, and the reception unit 220 may receive the PSCCH, the PSSCH, the PSDCH, the PSBCH, or the like from other terminals 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information set in advance. Also, the control unit 240 controls the terminal 20. The control unit 240 also includes a function of performing control not to perform signal transmission in the guard period by referring to the defined, notified, or determined guard period.

### <Summary>

According to the present embodiment, at least a terminal and a base station described in the following respective items are provided.

### [Item 1]

A terminal including:
a reception unit configured to receive, from a base station, resource configuration information of an SRS (sounding reference signal) for antenna switching; and
a transmission unit configured to transmit a plurality of SRSs with an interval of a guard period of symbols the number of which is greater than a specific number of symbols based on the resource configuration information.

### [Item 2]

The terminal as described in Item 1,
wherein, when a subcarrier spacing to be used by the terminal is equal to or greater than 240 kHz, the specific number of symbols is 2.

### [Item 3]

The terminal as described in Item 1 or Item 2,
wherein one or a plurality of SRS resource sets is/are configured by the resource configuration information, and each SRS resource set includes SRS resources the number of which is equal to or less than a specific value, and
the transmission unit transmits SRS using the SRS resources the number of which is equal to or less than the specific value in each slot of a plurality of slots in which the plurality of SRS resource sets are configured.

### [Item 4]

The terminal as described in Item 3,
wherein the SRS resource the number of which is equal to or less than the specific value is one SRS resource.

### [Item 5]

A base station including:
a transmission unit configured to transmit, to a terminal, resource configuration information of an SRS (sounding reference signal) for antenna switching; and
a reception unit configured to receive, from the terminal, a plurality of SRSs transmitted with an interval of a guard period of symbols the number of which is greater than a specific number of symbols based on the resource configuration information.

### [Item 6]

The terminal as described in Item 3, further including a control unit configured to determine the number of SRS resource sets in the resource configuration information of SRS or the number of SRS resources per one SRS resource set based on capability information, received from the terminal, indicating x transmissions and y receptions.

Any of the above-described configurations provides a technique that enables a terminal to appropriately transmit an SRS for acquiring downlink channel state information.

### <Supplementary Notes>

Furthermore, according to the present embodiment, at least a terminal and a base station shown in each of the following items are provided.

### [Item 1]

A terminal including:
a reception unit configured to receive, from a base station, configuration information of SRS resource sets the number of which is greater than a specific value at most as resource configuration information of an SRS (sounding reference signal) for antenna switching; and
a transmission unit configured to transmit the SRS based on the resource configuration information.

### [Item 2]

The terminal as described in Item **1,**
wherein, when a subcarrier spacing to be used by the terminal is 480 kHz, the number greater than the specific value is 5.

### [Item 3]

The terminal as described in Item 2,
wherein the number of SRS resources per one SRS resource set is 2 or 4.

### [Item 4]

The terminal as described in Item 1,
wherein, when a subcarrier spacing to be used by the terminal is 480 kHz or 960 kHz, the number greater than the specific value is 8.

### [Item 5]

The terminal as described in Item 4,
wherein the number of SRS resources per one SRS resource set is 1.

### [Item 6]

A base station including:
a transmission unit configured to transmit, to a terminal, configuration information of SRS resource sets the number of which is greater than a specific value at most as resource configuration information of an SRS (sounding reference signal) for antenna switching; and
a reception unit configured to receive the SRS transmitted based on the resource configuration information.

Any of the above-described configurations provides a technique that enables a terminal to appropriately transmit an SRS for acquiring downlink channel state information. In particular, according to items 2 and 3, the SRS transmission operation can be appropriately performed particularly in SCS=480kHz. According to items 4 and 5, the SRS transmission operation can be appropriately performed particularly in SCS=480/960 kHz.

### (Hardware Configuration)

The block diagrams (FIGs. 16 and 17) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

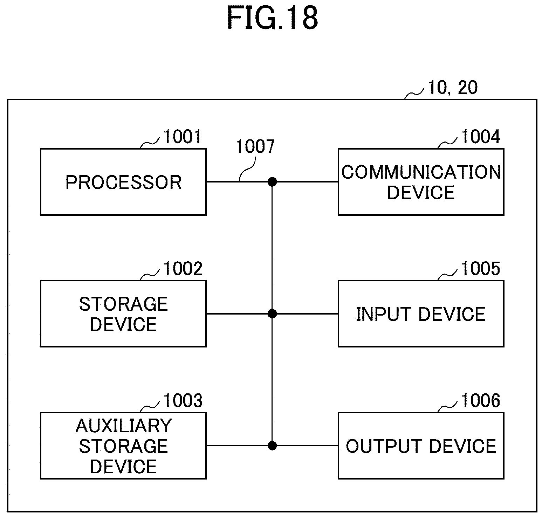

For example, the base station 10, the terminal 20 and the like in one embodiment of this disclosure may function as a computer for performing the processing of a radio communication method of this disclosure. FIG. 18 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 shown in FIG. 16 may be attained by a control program that is stored in the storage device 1002 and is operated by the processor 1001. Also, for example, the control unit 240 of the terminal 20 shown in FIG. 17 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

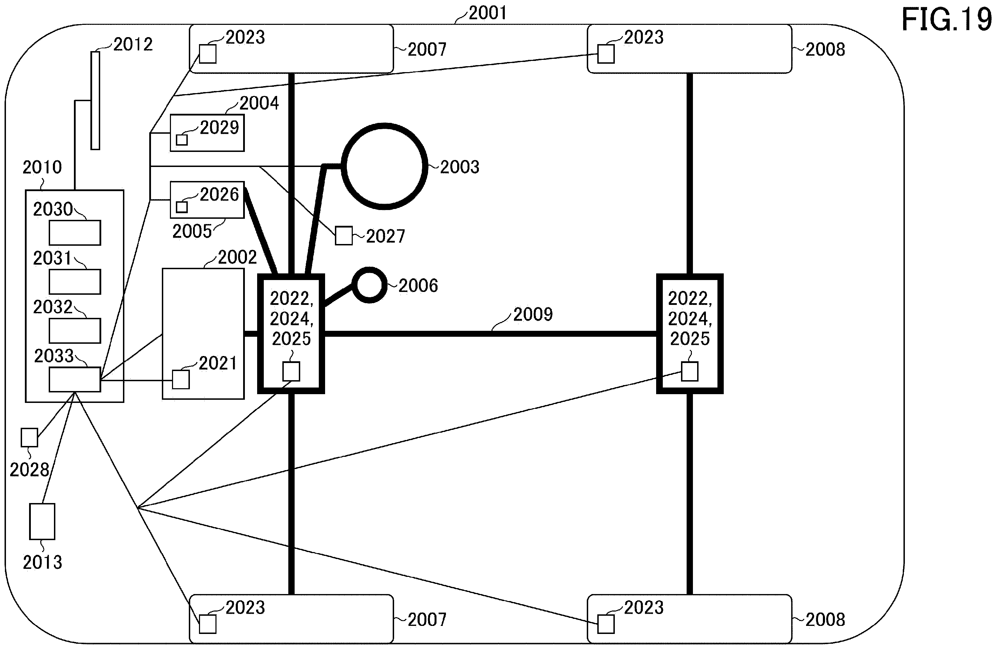

The terminal 20 or the base station 10 may be provided in a vehicle. FIG. 19 shows a configuration example of a vehicle 2001 according to the present embodiment. As shown in FIG. 19, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The terminal 20 or the base station 10 in each aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, or the like) that receives an input from the outside, and may include an output device (for example, a display, a speaker, an LED lamp, a touch panel, or the like) that performs an output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input. For example, PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), a 6th generation mobile communication system (6G), an xth generation mobile communication system (xG) (x is an integer or a decimal for example), future radio access (FRA), new radio (NR), New radio access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, created, or defined on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmission device, a reception device, a communication device, or the like. At least one of the base station and the mobile station may be a device mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may differ for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

- 10: base station
- 110: transmission unit
- 120: reception unit
- 130: configuration unit
- 140: control unit
- 20: terminal
- 210: transmission unit
- 220: reception unit
- 230: configuration unit
- 240: control unit
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheels
- 2008: rear wheels
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port (IO port)

## Claims

1. A terminal comprising:
a reception unit configured to receive, from a base station, configuration information of SRS resource sets the number of which is greater than a specific value at most as resource configuration information of an SRS (sounding reference signal) for antenna switching; and
a transmission unit configured to transmit the SRS based on the resource configuration information.

2. The terminal as claimed in claim 1,
wherein, when a subcarrier spacing to be used by the terminal is 480 kHz, the number greater than the specific value is 5.

3. The terminal as claimed in claim 2,
wherein the number of SRS resources per one SRS resource set is 2 or 4.

4. The terminal as claimed in claim 1,
wherein, when a subcarrier spacing to be used by the terminal is 480 kHz or 960 kHz, the number greater than the specific value is 8.

5. The terminal as claimed in claim 4,
wherein the number of SRS resources per one SRS resource set is 1.

6. A base station comprising:
a transmission unit configured to transmit, to a terminal, configuration information of SRS resource sets the number of which is greater than a specific value at most as resource configuration information of an SRS (sounding reference signal) for antenna switching; and
a reception unit configured to receive the SRS transmitted based on the resource configuration information.
